# EUROPEAN PATENT APPLICATION

(11) **EP 4 734 357 A1**
(43) Date of publication of application: **29.04.2026**
(21) Application number: 25210712.3
(22) Date of filing: 23.10.2025
(51) Int. Cl.: H02P 25/22, H02P 29/024, B60L 3/00, B60L 50/15, H02J 4/25, H02J 7/34, H02K 3/28, H02K 16/04, H02K 21/24, H02P 25/028, H02P 27/06

(54) **ELECTRIC PROPULSION UNIT**

(30) Priority: 25.10.2024 GB 202415769
(71) Applicant: Evolito Ltd, Bicester, Oxford Oxfordshire OX25 2PA (GB)
(72) Inventor: SPILLER, Robert, Pitstone, LU7 9GD (GB)
(74) Representative: Marks & Clerk LLP

(57) **Abstract**

An Electrical Propulsion Unit having at least one electric machine and first and second power circuits. The electric machine has a stator formed of first and second electrically isolated sets of multi-phase windings for generating a magnetic field, and a rotor spaced apart from the stator and configured to magnetically interact with the magnetic field generated by the stator. The rotor is mechanically coupled to a shaft for driving a mechanical load. Each of the first and second power circuits are respectively electrically coupled to the first and second electrically isolated sets of multi-phase windings. Each of the first and second power circuits are formed of a respective first and second energy source, and a respective first and second controller electrically coupled between the respective first and second energy source and the electric machine where the first controller drives the first electrically isolated set of multi-phase windings of the electrical machine, and the second controller drives the second electrically isolated set of multi-phase windings of the electrical machine. A vehicle controller is configured to provide a first torque demand to the first controller and a second torque demand to the second controller. One or both of the first and second controllers are configured to provide a respective first or second current output to drive the respective isolated sets of multi-phase windings of the stator to produce a torque output on the rotor of the electric machine based on the first and second torque demand.

## Description

### FIELD OF THE INVENTION

The present invention relates to an improvement in critical power systems enabling energy transfer between energy stores without compromising safety.

### BACKGROUND OF THE INVENTION

In recent years, significant advancements in technology have catalysed substantial transformations in the design and configuration of air transport vehicles. Notably, these changes have extended to power usage and the increasing complexity of various electrical systems within these vehicles, particularly in the context of alternative fuel vehicles, such as hybrid, electric, and fuel cell-powered vehicles.

Electric and hybrid vehicles frequently utilise electrical components that are powered by direct current (DC) power sources, such as batteries. To enable the operation of alternating current (AC) electric motors, which are commonly found in vehicle propulsion systems, devices known as power inverters are employed to convert DC power into AC power.

High-voltage batteries, or battery packs, are typically utilised to provide the necessary electric power storage for electric traction systems in most electric and hybrid electric vehicles. These high-voltage batteries often have a nominal voltage rating of 100 volts or higher, depending on the specific application and vehicle design.

In safety-critical applications where continuous performance is essential, the implementation of multiple power paths is a common strategy to enhance system robustness. Such applications include aerospace vertical take-off and landing (VTOL) vehicles, where each propeller is powered by at least two independent power paths, each fed by separate high-voltage (HV) power supplies.

The critical safety requirements of such designs necessitate the absence of any electrical connection between the independent power paths or their respective energy sources.

Each of these independent HV power supplies may be derived from an electrical battery composed of multiple cells. Alternatively, one HV supply could originate from a fuel cell system, while another could be sourced from a second battery.

A problem occurring with separated energy stores is that with different system energy usage patterns a particular energy store may become depleted, whilst a separate energy store may remain largely unused. During operation it is advantageous for all these stores of electrical energy to be balanced in terms of energy stored, or at a controlled level, to provide for the vehicle's mission profile.

Various methods of achieving transfer energy between these energy stores during operation have been tried and all satisfactory methods providing this energy transfer function seek to maintain the independent nature of individual electrical energy stores and not compromise robustness of the system by introducing sources of common failure.

US20090033253 teaches a first set of windings fed by a first inverter with a first power source and a second set of windings fed by a second inverter with a second power source. The first set of windings and the second set of windings are configured as a transformer for voltage matching between a first DC energy source and a second DC energy source. Such intimate windings are a source of common mode failure, for if one winding is damaged through overheating, its associated proximate winding has potential to also fail.

In US16/881665 a multi-lane permanent magnet synchronous motor is powered by a high voltage and separate low voltage energy storage units (batteries) and has two sets of phase windings wound in common winding slots, configured to function as a transformer. A control circuit selectively connects the first high voltage battery to one of the motor phase windings forming a first lane and may selectively connect the second lower voltage battery to the second set of motor phasing windings to form a second lane. The control circuit can cause current to flow in the motor windings which can be transformed and fed back to charge the opposite energy store. The dual stator coils winding ratio is chosen to match the different battery voltages.

For aerospace applications there is advantage in maintaining geographically separate and avoiding common mode failure potential for battery energy stores, whilst providing a means to balance such energy stores to optimise energy availability. There is additional value for aerospace applications in being able to transfer power from one electrical energy store to a system that is nominally connected to a different electrical energy store during operation if this different electrical energy store has become unavailable, for example during a failure.

### SUMMARY OF THE INVENTION

The present invention is defined by the independent claims appended hereto. Further advantageous embodiments are also defined by the dependent claims, also appended hereto.

We describe an Electric Propulsion Unit (EPU), comprising: an electric machine comprising a stator formed of first and second electrically isolated sets of multi-phase windings for generating a magnetic field, and a rotor spaced apart from the stator and configured to magnetically interact with the magnetic field generated by the stator, the rotor being mechanically coupled to a shaft for driving a mechanical load; a first power circuit electrically coupled to the first isolated set of multi-phase windings, the first power circuit comprising a first energy source and a first controller electrically coupled between the first energy source and the electric machine, the first controller for driving the first electrically isolated set of multi-phase windings of the electrical machine; a second power circuit electrically coupled to the second isolated set of multi-phase windings, the second power circuit comprising a second energy source and a second controller electrically coupled between the second energy source and the electric machine, the second controller for driving the second electrically isolated set of multi-phase windings of the electrical machine, the second power circuit being electrically isolated from the first power circuit; and a vehicle controller configured to provide a first torque demand to the first controller and a second torque demand to the second controller, wherein one or both of the first and second controllers are configured to provide a respective first or second current output to drive the respective isolated sets of multi-phase windings of the stator to produce a torque output on the rotor of the electric machine based on the first and second torque demand.

Advantageously, such an arrangement enables torque production on the rotor of the electric machine to be shared between independent and electrically isolated power circuits. This torque production on the rotor may be equally shared or unequally shared, depending on the use case. Furthermore, this arrangement also makes it possible to share or transfer power between the different electrically isolated power circuits via torque transfer by means of the common rotor.

The vehicle controller may be configured to provide a first torque demand and second torque demand to the respective first and second controllers such that each of the first and second controllers produce a torque output on the rotor of the electric machine. The vehicle controller may be configured to provide the first torque demand and second torque demand to the respective first and second controllers such that the first and second controllers share an approximately equal portion of the production of the torque output of the rotor.

Alternatively, the vehicle controller may be configured to provide a first torque demand and second torque demand to the respective first and second controllers such that a portion of torque output of the rotor produced by the first controller is different to the torque output of the rotor produced by the second controller. Torque output on the rotor produced by one of the first or second controllers may be greater than the torque output on the rotor produced by the other controller. The vehicle controller may be configured to provide a first torque demand and second torque demand to the respective first and second controllers such that the first or second controller is configured to produce a greater torque output on the rotor than the other controller based on a state of charge of the respective first or second energy source. The vehicle controller may be configured to provide the torque demand that produces the greater torque output to the respective controller in the power circuit having the energy source with the greater state of charge.

In an alternative arrangement, the vehicle controller may be configured to provide a braking torque demand to either of the first or second controllers such that a braking torque is produced on the rotor by the respective first or second controller. The vehicle controller may be configured to provide a torque demand to the other of the first or second controller such that a torque output is produced on the rotor that is greater than the braking torque produced on the rotor. The first or second controller receiving the braking torque demand is configured to convert an excess torque output produced on the rotor into a regenerative current for supplying the respective energy source, the excess torque output being the difference in torque on the rotor between the torque output from the other of the first or second controller and the net torque output from the electrical machine.

**In** a further alternative arrangement, the vehicle controller may be configured to detect if the first or second controllers are in a fail state. The vehicle controller may be configured to provide a torque demand only to the controller not in a fail state. The vehicle controller may be configured to provide an adjusted torque demand to at least partially compensate for the controller in the fail state.

**In** this arrangement, the controller in the fail state may be configured to convert a torque output produced on the rotor by the controller in the non-fail state into a regenerative current for supplying the respective energy source.

**In** any of the above, one or both of the energy source may comprise one or more of a fuel cell, battery, or DC supply.

The electric machine may be an axial flux machine.

The stator of the axial flux machine may comprise: a plurality of stator bars disposed circumferentially at intervals around an axis, each of the stator bars having a single-phase multi-turn coil wound therearound to form a stator coil stack for generating a magnetic field generally parallel to the axis, the plurality of stator coil stacks being arranged to provide a hollow region at the centre of the axis.

The rotor of the axial flux machine may comprise a set of permanent magnets and is mounted for rotation about the axis of the machine, the rotor being spaced apart from the stator along the axis of the machine to define a gap between the stator and rotor.

The axial flux machine may comprise a second rotor comprising a set of permanent magnets and is mounted for rotation about the axis of the machine, the second rotor being spaced apart from the stator along the axis of the machine to define a gap between the stator and second rotor, and the second rotor being disposed on a side of the stator opposed to the rotor.

### LIST OF FIGURES

The present invention will be described, by way of example only, and with reference to the accompanying figures, in which:
Figure 1 shows a cross-section schematic drawing of a double rotor single stator yokeless and segmented armature axial flux machine showing the magnetic circuit and key components;
Figure 2 shows an isometric schematic drawing a double rotor single stator yokeless and segmented armature axial flux machine;
Figure 3 shows a detailed isometric schematic drawing of a double rotor single stator yokeless and segmented armature axial flux machine;
Figure 4 shows a plan schematic drawing of an arrangement of stator bars in a yokeless and segmented armature axial flux machine;
Figure 5 shows a schematic drawing of component blocks providing two electrically isolated paths for driving an electric machine;
Figure 6 shows a schematic drawing of component blocks providing two electrically isolated paths to transfer power between electrically isolated energy stores; and
Figure 7 shows a schematic an example circuit diagram of controllers electrically coupled to an electric machine.

### DETAILED DESCRIPTION OF THE PREFERRED EMBODIMENTS

In brief, the present invention relates to safety critical power systems comprising at least one electric machine and first and second power circuits. The electric machine has a stator formed of first and second electrically isolated sets of multi-phase windings for generating a magnetic field, and a rotor spaced apart from the stator and configured to magnetically interact with the magnetic field generated by the stator. The rotor is mechanically coupled to a shaft for driving a mechanical load. Each of the first and second power circuits are respectively electrically coupled to the first and second isolated sets of multi-phase windings. Each of the first and second power circuits are formed of a respective first and second energy source, and a respective first and second controller electrically coupled between the respective first and second energy source and the electric machine where the first controller drives the first electrically isolated set of multi-phase windings of the electrical machine, and the second controller drives the second electrically isolated set of multi-phase windings of the electrical machine. A vehicle controller is configured to provide a first torque demand to the first controller and a second torque demand to the second controller. One or both of the first and second controllers are configured to provide a respective first or second current output to drive the respective isolated sets of multi-phase windings of the stator to produce a torque output on the rotor of the electric machine based on the first and second torque demand.

Advantageously, such an arrangement enables torque production on the rotor of the electric machine to be shared between independent and electrically isolated power circuits. This torque production on the rotor may be equally shared or unequally shared, depending on the use case. Furthermore, this arrangement also makes it possible to share or transfer power between the different electrically isolated power circuits via torque transfer by means of the common rotor.

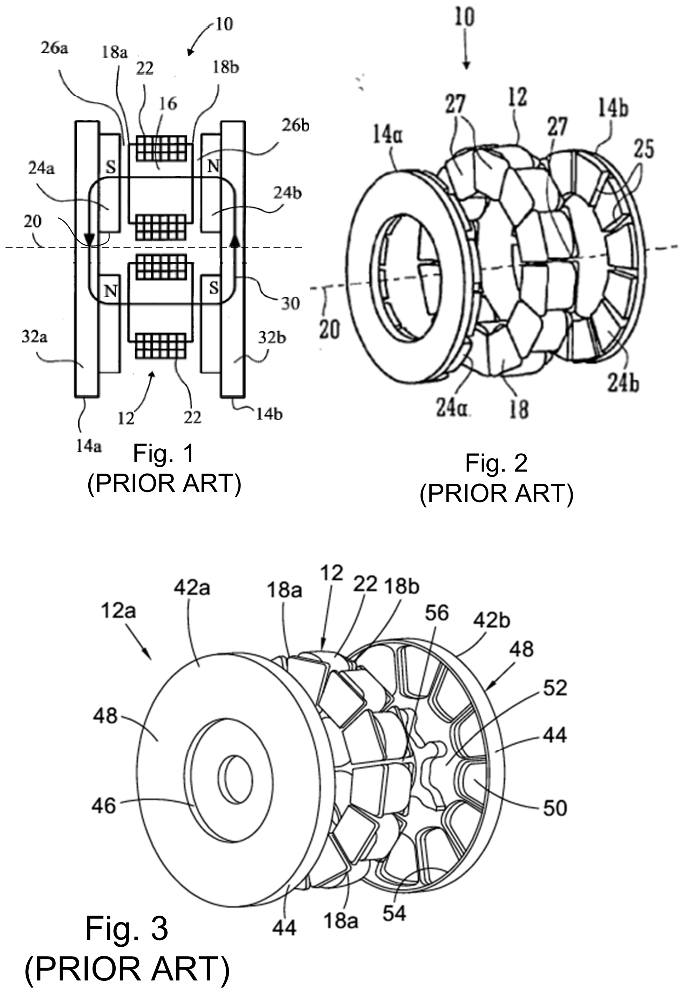

Referring first to Figures 1, 2 and 3, which are taken from WO2012/022974, show a schematic illustration of a yokeless and segmented armature machine 10.

The machine 10 comprises a stator 12 and two rotors 14a,b. The stator 12 is a collection of separate stator bars 16 spaced circumferentially about a rotation axis 20 of the rotors 14a,b. Each bar 16 has its own axis (not shown) which is preferably, but not essentially, disposed parallel to the rotation axis 20. Each end of each stator bar is provided with a shoe 18a,b which serves a physical purpose of confining a coil stack 22, which stack 22 is preferably of square/rectangular section insulated wire so that a high fill factor can be achieved. The coils 22 are connected to an electrical circuit (not shown) that, in the case of a motor, energizes the coils so that the poles of the resultant magnetic fields generated by the current flowing in the coils is opposite in adjacent stator coils 22.

The two rotors 14a, b carry permanent magnets 24a,b that face one another with the stator coil 22 between (when the stator bars are inclined - not as shown - the magnets are likewise). Two air gaps 26a,b are disposed between respective shoe and magnet pairs 18a/24a, 18b/24b. There are an even number of coils and magnets spaced around the axis of rotation 20 and, preferably, there are a different number of coils and magnets so that the coils do not all come into registration with the corresponding magnet pair at the same time and at the same rotational position of the rotor with respect to the stator. This serves to reduce cogging.

In a motor the coils 22 are energized so that their polarity alternates serving to cause coils at different times to align with different magnet pairs, resulting in torque being applied between the rotor and the stator. The rotors 14a,b are generally connected together (for example by a shaft, not shown) and rotate together about the axis 20 relative to the stator 12. The magnetic circuit 30 is provided by two adjacent stator bars 16 and two magnet pairs 24a,b and a back iron 32a,b for each rotor links the flux between the back of each magnet 24a,b facing away from the respective coils 22. The stator coils 16 are enclosed within a housing that extends through the air gap 26a, b and which defines a chamber supplied with a cooling medium.

Turning to Figure 3, a stator 12a is shown in which the stator coils are located between plastic material clamshells 42a, b. These clamshells have external cylindrical walls 44, internal cylindrical walls 46, and annular radially disposed walls 48. In the prior art example of Figure 3 the radial walls 48 include internal pockets 50 to receive the shoes 18a,b of the stator bars 16 and serve to locate the stator coil assemblies 16, 22, 18a,b when the two clam shell housings 42a, b of the stator 12a are assembled together. The stator housing 42a, b defines spaces 52 internally of the coils 22 and externally at 54 around the outside of the coils 22 and there are spaces 56 between the coils. The spaces 52,54,56 are interlinked defining a cooling chamber. Although not shown in Figure 3, when assembled, the stator housing 42a,b is provided with ports that allow cooling medium such as oil to be pumped into the spaces 52, 54, 56 to circulate around the coils and cool them.

The coil cores may be laminated with the inter-lamination insulation parallel to the desired flux direction. However, the coil cores may also be formed from soft-iron particles coated with electrical insulation and moulded to a desired shape (soft magnetic composites - SMC), being bound together by the insulation matrix. Conveniently the shoes and stator bar may be formed separately and subsequently assembled.

### Electrical and magnetic path Isolation

In its broadest implementation, the electrical and magnetic path isolation technique utilises two or more independent controllers (otherwise known as inverters where the main power input to the system is DC and the axial flux machine is controlled using a multi-phase AC output voltage) that drive the windings wound round the stator bars or teeth of the stator in order to generate the rotating magnetic field that causes a rotor magnetically coupled with the stator bars to rotate about an axis. Since we are discussing axial flux machines, the magnetic flux is generally parallel to the axis of rotation of the rotor. However, it would be understood that the present invention would also be applicable to other electric machine architectures such as radial flux machines with two or more electrically isolated multiphase windings.

By using separate controllers to drive different electrically isolated groups of wound stator bars within the stator, redundancy is possible as if one controller or multiphase winding fails, the remaining controller(s) may continue to drive the respective group of stator bars and thus the rotor may continue to drive the output shaft to provide torque. Whilst not able to provide the output power as before, this arrangement can at least implement a machine that can provide a limp-home mode, or sufficient output torque to complete the machine's task until it can be stopped safely.

Whereas redundancy is a valuable characteristic of the arrangement described, another less obvious characteristic is derived from this arrangement, enabling electrically and magnetically isolated transfer of energy from one power circuit to another.

To achieve suitable independence between the stator bar groups (multiphase windings), it is generally also required they have sufficiently low mutual inductance i.e. are magnetically isolated from each other in addition to being electrically isolated from each other. It is also generally required that the groups (multiphase windings) are sufficiently thermally isolated from each other. With the combination of electrical, magnetic and thermal isolation, faults or any other spurious behaviour within one multiphase winding will not affect the behaviour of the other multiphase winding, allowing it to continue operating as normal.

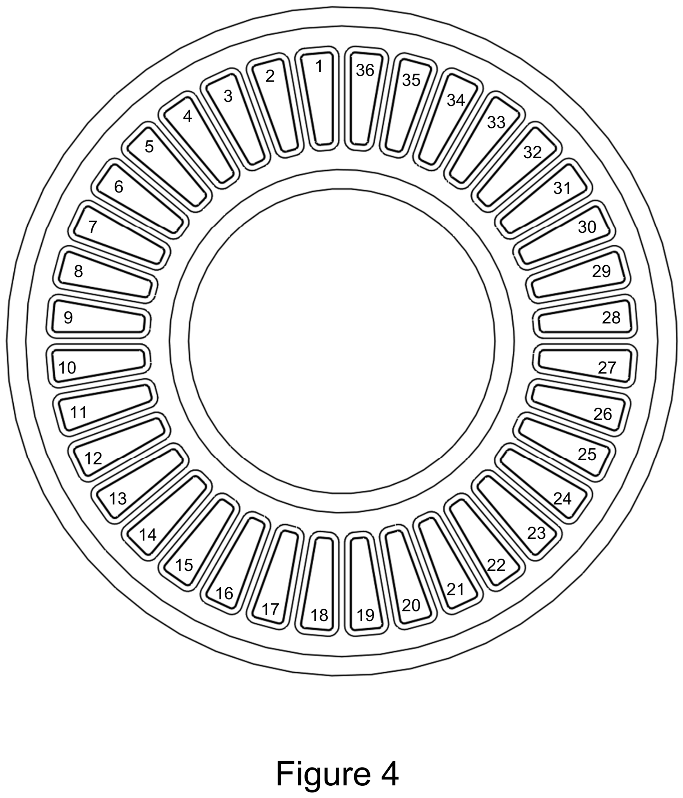

**In** the arrangement shown in figure 4, 36 stator bars (labelled 1 to 36) are shown. However, this present invention is not limited to such a number of stator bars or the arrangement of this stator. Fewer stator bars may be present, or more stator bars may be present, depending on the structure of an axial flux machine that could utilise such a stator. As described above, each stator bar has a single-phase multi-turn coil wound round to provide a stator coil stack that is electrically connected to a controller (not shown) via respective inputs.

**In** one implementation, the stator bars are divided into two groups with a first half of the stator bars being allocated to a first group of stator bars, and the remaining half of the stator bars being allocated into a second group of stator bars. For example, with reference to Figure 4, stator bars 1 to 18 may be allocated into a first group of stator bars, and stator bars 19 to 36 may be allocated into a second group of stator bars.

| Stator Bar | Electrical Group |
|---|---|
| 1-18 | 1 |
| 19-36 | 2 |

Each of the first group of stator bars are electrically connected to a first controller via a first input (not shown for simplicity), which is configured to provide a first multi-phase output voltage to drive the first group of stator bars. Each of the second group of stator bars may be electrically connected to a second controller via a second input (not shown for simplicity), which is configured to provide a second multi-phase output voltage to drive the second group of stator bars.

This implementation achieves the desired combination of sufficient electrical, magnetic and thermal isolation between the multiphase windings, although it is just one example; other stator arrangements can achieve similar degrees of isolation.

Whilst we discuss multi-phase output voltages, in practice this may be a three-phase output voltage, although other number of phases in a multi-phase output voltage are possible.

We refer above to isolated groups of stator bars, where each group comprises multiple stator bars. However, we will also discuss isolated sets of multi-phase windings, where each multi-phase winding comprises a grouping of single phase windings (for example on a respective stator bar) for each of the respective phase voltages. Each of the isolated sets of multi-phase windings may comprise one or more groupings of multi-phase windings.

Taking the example arrangement given in Figure 4, and given the groupings of stator bars 1 to 18 for electrically isolated group 1, and stator bars 19 to 36 for electrically isolated group 2, the isolated sets 1 and 2 of multi-phase windings may be arranged as follows for a 3-phase system:

| Stator Bar | Multi-phase Group | Electrical Set |
|---|---|---|
| 1-3 | 1 | 1 |
| 4-6 | 2 | 1 |
| 7-9 | 3 | 1 |
| 10-12 | 4 | 1 |
| 13-15 | 5 | 1 |
| 16-1 8 | 6 | 1 |
| 19-21 | 1 | 2 |
| 22-24 | 2 | 2 |
| 25-27 | 3 | 2 |
| 28-30 | 4 | 2 |
| 31-33 | 5 | 2 |
| 34-36 | 6 | 2 |

It would be understood that for other multi-phase voltages that are not 3-phase, other groupings are possible. For example, for a 6-phase multi-phase voltage, there would be three multi-phase groupings (each grouping comprising six stator bars) in each electrical set in a stator comprising 36 stator bars.

A rotor of the axial flux machine comprises a set of permanent magnets and is mounted for rotation about the axis of the machine defined by the stator. The rotor is spaced apart from the stator along the axis of the machine to define a gap between the stator and rotor. The rotor may rotate around the axis. When the stator bars are driven with suitable current from the controller, a magnetic field is generated generally parallel to the axis of the machine, and which interacts with the permanent magnets of the rotor to provide a torque to the rotor.

Though the skilled reader will appreciate the advantage of having a dual set of coil stacks housed within a common housing, with each group of coil stacks supplied by a separate controller, there is an additional less obvious advantage to this arrangement enhancing safety and enabling power redistribution / balancing among electrical energy stores without introducing a common mode failure route.

The present invention will be described in detail with reference to schematic drawings and description of an embodiment.

The present invention is exemplified by an Electric Propulsion Unit in an aircraft system, such as a VTOL aircraft system for example. The EPU comprises a motor, and first and second independent and electrically isolated power circuits comprising independent energy sources. Energy sources may comprise, for example, batteries, fuel cells and alternate electrically rechargeable energy stores.

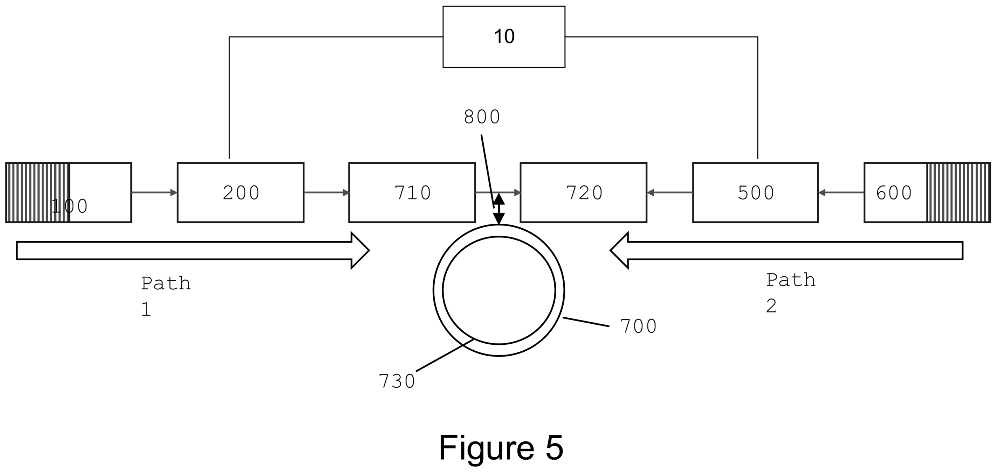

With reference to Figure 5 which shows a schematic block diagram of an example EPU, there are shown two controllers 200, 500 connected to a motor 700 which has two independent 3-phase windings 710, 720 sharing the same rotor 730. Coil windings 710, 720 do not share the same electrical or magnetic circuit.

Power or energy sources 100, 600 are fully independent of each other and may be spatially separated. The only connection between power sources 100, 600 is through their controllers 200, 500 to produce torque via a common rotor 730 and shaft 800, as will be described below.

With reference to Figure 5 there is shown a direction of current flow indicated by the arrows towards the motor 700 left to right and from right to left in Figure 5. In the instance shown, power is drawn from battery 100 via controller 200, into 3-phase winding 710. Magnetic field generated by current in windings 710 reacts with permanent magnet rotor 730 to generate torque on the rotor and in shaft 800. Correspondingly a similar situation is found for battery 600, and its controller 500, delivering field-generating current to 3-phase coils 720. The combined torque is delivered as expected by an overall motor control function from demand generated by for example the operator of the vehicle. The overall motor control function may be provided by, for example, a vehicle controller 10, which receives input from for example the operator of the vehicle and provides torque demands to each of the first 200 and second 500 controllers. As such, the first and second controllers are configured to provide a respective first or second current output to drive the respective isolated sets of multi-phase windings of the stator to produce a torque output on the rotor of the electric machine based on the first and second torque demand.

The vehicle controller 10 may be configured to provide a first torque demand and second torque demand to the respective first and second controllers such that each of the first and second controllers produce a torque output on the rotor of the electric machine, as is the case shown in Figure 5. In one example, the vehicle controller may be configured to provide the first torque demand and second torque demand to the respective first and second controllers such that the first and second controllers share an approximately equal portion of the production of the torque output of the rotor. In this situation, torque provided to the rotor is produced approximately equally by the first and second controllers based on the first and second torque demand provided by the vehicle controller 10.

In other scenarios, the proportion of torque output on the rotor by the first 200 and second 500 controllers may not be equal. For example, the torque output on the rotor produced by one of the first or second controllers may be greater than the torque output on the rotor produced by the other controller.

In this case, the vehicle controller may decide to issue first and second torque demands to the first 200 and second 500 controllers in order to assist with balance of power between the different power circuits. For example, one of the energy sources 100, 600 may be at a lower state of charge. Such a situation may occur for example if only battery 600 has been used to supply power e.g., for cruising and battery 100 has been isolated. In this situation, the vehicle controller 10 may provide a torque demand to controller 200, which is in the power circuit having the energy source with the higher state of charger, that instructs the controller 200 to produce a greater torque output on the rotor than compared to the torque demand provided to controller 500 in the power circuit having the energy source with the lower state of charge. In that way, the vehicle controller 10 may balance the state of charge of the different power circuits over time since the energy source having the higher state of charge will be depleted at a faster rate that the energy source having the lower state of charge.

Instead of the vehicle controller just issuing a torque demand that is different to each of the controllers 200, 500 in order to share the torque output and balance the state of charge over time, the controllers may be controlled actively to transfer power between the different power circuits in order to increase the state of charge of one circuit using the torque output of the other power circuit.

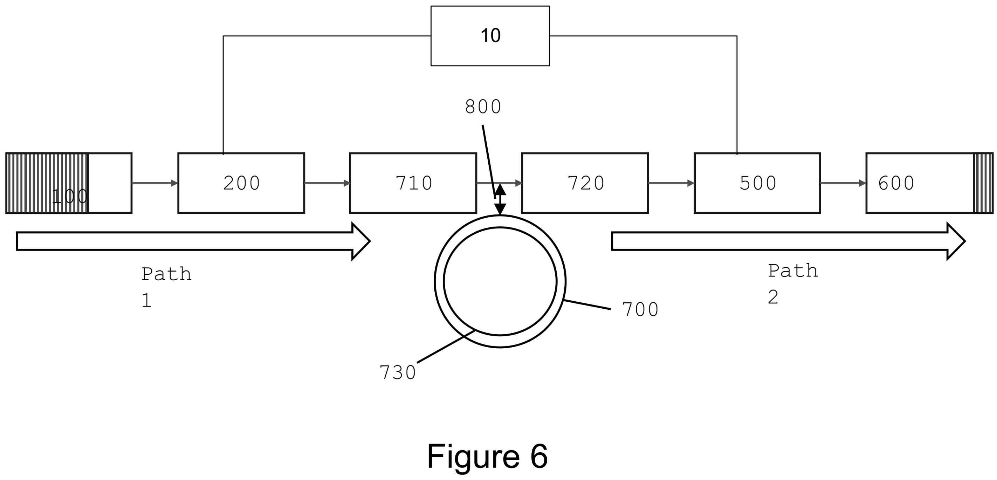

With reference to Figure 6, there is shown a similar schematic block diagram to that of Figure 5, in which in the instance shown battery 600 is more depleted than battery 100. Such a situation may occur for example if only battery 600 has been used to supply power e.g., for cruising and battery 100 has been isolated. In the instance shown in Figure 6 there is shown current / power transfer from battery 100 to battery 600 which occurs by way of the rotor or rotor shaft 800 and common permanent magnet rotor reaction with electrically isolated coils 710 and 720.

The invention described by this embodiment is mechanically and electrically robust enabling high torque loads to be translated into electrical energy through electrically isolated windings.

This is made possible by virtue of the way in which the controllers drive the electric machine. In motor control theory, motors can operate in one of two modes: motoring mode or braking mode, and this may be split between forward and reverse operation, which gives four possible modes, or quadrants, of operation.

In the first quadrant, torque and speed are positive, so operation in this quadrant results in a positive motoring torque providing a "forward" motion of the rotor of the motor.

In the second quadrant, torque is negative and speed is positive. As such, the negative torque opposes the forward direction of the rotor, which thus provides a braking torque to the rotor. A motor operating in this quadrant experiences a braking torque which will result in the rotor gradually slowing down to a stop.

In the third quadrant, torque and speed are negative. As such, the negative torque provides a negative motoring torque to the rotor, which is spinning in the "reverse" direction.

In the fourth quadrant, torque is positive and speed is negative. As such, the positive torque provides a braking torque to the rotor, which is spinning in the reverse direction (in opposition to the positive braking torque). A motor operating in this quadrant experiences a braking torque which will result in the rotor gradually slowing down to a stop.

The motor is operated in one of these four quadrants through careful control of the switching patterns used in the controller 200, 500. In practice, any of these four quadrants are possible in automotive applications. In aerospace applications, the most likely quadrants of operation are 1 and 2, although this is not always the case.

In Figure 6, the vehicle controller 10 provides a first torque demand to the first controller 200 to provides output current that operate the first set of multiphase windings in a motoring torque mode of operation (quadrant 1, for example). Similarly, since there is a desire to provide regenerative power to the second circuit in this scenario, the vehicle controller provides a second torque demand to the second controller 500. In this case, since regenerative power is required in the same power circuit as the second controller 500, the second torque demand provided to the second controller 500 is a braking torque demand, which drives the second set of multiphase windings in a braking torque mode of operation (quadrant 2, for example).

So long as the motoring torque produced in the rotor by the first controller 200 is greater than the braking torque produced in the rotor by the second controller 500, the rotor will continue to spin in the forward direction. The vehicle controller 10 may provide the first (motoring) torque demand and second (braking) torque demand such that the first controller 200 may provide a greater torque to the rotor than is required to keep the rotor spinning at the desired speed. Any excess torque in the rotor produced by the first controller 200 may be "captured" by the braking torque produced by the second controller 500.

Since the second controller is operating in the quadrant that applies a braking torque, the excess torque is converted into regenerative electrical power by the second controller 500, which is then supplied to the energy store 600. In effect, the first controller 200 is operating the first set of multiphase windings as a motor, and the second controller 500 is operating the second set of multiphase windings as a generator, using the rotor as a common mechanical interface between the two power circuits to share the torque between the different power circuits. All of this occurs within the same electric machine.

Of course it would be understood that the system may be operated the other way around. That is, the second controller 500 may operate to provide a motoring torque to the second set of multiphase windings and the first controller 200 may operate to provide a braking torque to the first set of multiphase windings. The vehicle controller 10 would provide the required first and second torque demands for such operation. In this mode of operation, the first controller 200 would provide regenerative electrical power to the first energy source 100.

Whilst the above scenario discusses the respective first 200 or second 500 controller actively operating in the braking torque mode of operation, there may be situations in which the respective controller is in a fail state. That is, a failure of one or more aspects of the controller prevents it from operating normally and providing output currents to drive the respective set of multiphase windings of the electric machine based on a torque demand input. For example, when a fault condition lies with the controller, this may be as a result of a problem with the Low Voltage supply that provides power to various components in the controller. Furthermore, fault conditions with the inverter may occur if there is a communications failure, where various components communicating via the vehicle's communication network lose communication with each other resulting in the inverter controller being unable to control the switches correctly. There may be a fault with the micro-controllers within the controller that would prevent the switches being switched correctly. There may be a failure in the position sensor data being sent to the controller (faulty sensor or broken wiring), or there may be a switch gate drive failure in the power electronics so that the power electronics within the controller can no longer switch the switches correctly.

If a controller is in such a fail state, the vehicle controller 10 may detect that the controller is in a fail state and adjust its operation accordingly. For example, the vehicle controller 10 may be configured to provide a torque demand only to the controller not in a fail state. Furthermore, the vehicle controller 10 may provide an adjusted torque demand to the working controller to at least partially compensate for the controller in the fail state, which may be unable to provide any motoring torque output on the rotor.

The controller in the fail state, however, may still be configured to convert a torque output produced on the rotor by the controller in the non-fail state into a regenerative current for supplying the respective energy source.

Motor controllers may be configured and arranged to provide fail state operating modes in which simple control of the switches may be enabled, For example, the switches forming the inverter part of the controller may operate in an Active Short Circuit mode (where specific switches are held closed to provide a short circuit across the line outputs of the multiphase winding), or they may be operated in an Open Circuit mode (where all switches are held open).

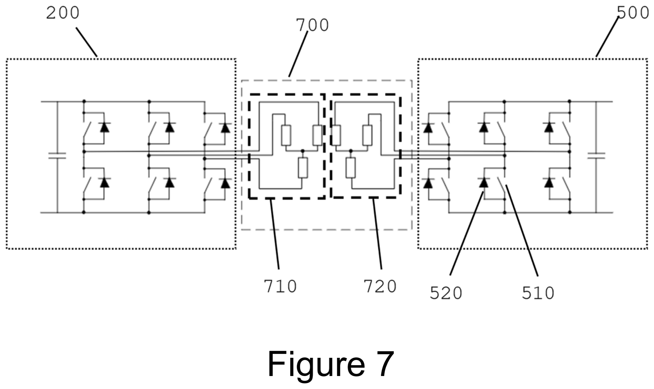

Figure 7 shows schematic an example circuit diagram of controllers electrically coupled to an electric machine. When the switches are operated in the fail condition in an Open Circuit mode, Back EMF generated by torque on the rotor causing it to rotate is seen on coils 720 being rectified in an uncontrolled manner by the anti-parallel diodes 520 of the inverter switches 510 of controller 500. If the back EMF generated in this arrangement is greater than the voltage of the energy source, this uncontrolled regenerated currents may be used to charge the energy source.

Using Figure 6 and Figure 7, where controller 500 is not operating correctly (for example in a fail state), a control by-pass to controller 500 may be implemented.

If controller 200 is operated in the motoring torque quadrant through the torque demand from the vehicle controller 10, the torque produced in the rotor by the first set of multiphase windings may be controlled to provide a motive force to the rotor of the motor and can also be used to control recharge of battery 600 through the motor 700 back EMF seen on coils 720 being rectified in an uncontrolled manner by the anti-parallel diodes 520 of the inverter switches 510 of controller 500 as discussed above. This approach also provides overall control of torque supply from motor 700. Advantageously, this configuration secures motive power from motor 700 as required and the full energy storage capacity of battery stores 100 and 600, even though controller 500 has failed.

In any of the above, windings 710 and 720 are electrically independent whether they take any of the common forms of motor 3-phase winding connections including Y / star, delta or combinations and variants of these approaches. In all instances windings are electrically isolated and can take advantage of the present invention.

The above methods enable the transfer of power from the first HV connection 100 through the first controller 200 path/lane to the first set of motor 3 phase windings 710 and then back through the second set of 3 phase motor windings 720 and the second controller path/lane 500 to the second HV connection 600.

Synchronisation of control between the first and second controller can be advantageous but is not required in a simple embodiment of the disclosed invention. Synchronisation of the controllers themselves is not required, as each of the controllers may be configured to produce torque in the rotor based on the torque demand from the vehicle controller and the angular position of the rotor, which is provided to the respective controller by one or more rotational position sensors on the electric machine. Internal control logic to each of the controllers may be used to generate the required output currents based on these inputs.

Although the invention has been exemplified with reference to battery energy stores the first and second energy sources described may instead be energy systems rather than sources or storage devices. For example, a fuel cell may be used to produce the first energy, and the secondary energy might be used by further loads that are electrical coupled to the secondary energy path. In this way the disclosed invention can enable and support an energy (and power) distribution system.

Because using the present invention energy stores / systems are electrically isolated and connected by a mechanical means the first and second energy paths can have different voltage levels, and the first and second energy paths can have different levels of safety integrity.

As discussed above, the electric machine may be an axial flux machine. The stator may be formed as a plurality of stator bars disposed circumferentially at intervals around an axis, each of the stator bars having a single-phase multi-turn coil wound therearound to form a stator coil stack for generating a magnetic field generally parallel to the axis. The plurality of stator coil stacks may be arranged to provide a hollow region at the centre of the axis.

The rotor of the axial flux machine may comprise a set of permanent magnets and is mounted for rotation about the axis of the machine, the rotor being spaced apart from the stator along the axis of the machine to define a gap between the stator and rotor.

The axial flux machine may comprise a second rotor comprising a set of permanent magnets that is mounted for rotation about the axis of the machine. The second rotor may be spaced apart from the stator along the axis of the machine to define a gap between the stator and second rotor, and the second rotor being disposed on a side of the stator opposed to the rotor.

However, the present invention is not limited to axial flux machines, or machines requiring permanent magnets. For example, the electrical machine may be formed of wound field rotor, synchronous reluctance machine, induction machine and the like.

No doubt many other effective alternatives will occur to the skilled person. It will be understood that the invention is not limited to the described embodiments and encompasses modifications apparent to those skilled in the art lying within the scope of the claims appended hereto.

## Claims

1. An Electric Propulsion Unit (EPU), comprising:
an electric machine comprising a stator formed of first and second electrically isolated sets of multi-phase windings for generating a magnetic field, and a rotor spaced apart from the stator and configured to magnetically interact with the magnetic field generated by the stator, the rotor being mechanically coupled to a shaft for driving a mechanical load;
a first power circuit electrically coupled to the first isolated set of multi-phase windings, the first power circuit comprising a first energy source and a first controller electrically coupled between the first energy source and the electric machine, the first controller for driving the first electrically isolated set of multi-phase windings of the electrical machine;
a second power circuit electrically coupled to the second isolated set of multi-phase windings, the second power circuit comprising a second energy source and a second controller electrically coupled between the second energy source and the electric machine, the second controller for driving the second electrically isolated set of multi-phase windings of the electrical machine, the second power circuit being electrically isolated from the first power circuit; and
a vehicle controller configured to provide a first torque demand to the first controller and a second torque demand to the second controller,
wherein one or both of the first and second controllers are configured to provide a respective first or second current output to drive the respective isolated sets of multi-phase windings of the stator to produce a torque output on the rotor of the electric machine based on the first and second torque demand.

2. An EPU according to claim 1, wherein the vehicle controller is configured to provide a first torque demand and second torque demand to the respective first and second controllers such that each of the first and second controllers produce a torque output on the rotor of the electric machine.

3. An EPU according to claim 2, wherein the vehicle controller is configured to provide the first torque demand and second torque demand to the respective first and second controllers such that the first and second controllers share an approximately equal portion of the production of the torque output of the rotor.

4. An EPU according to claim 2, wherein the vehicle controller is configured to provide a first torque demand and second torque demand to the respective first and second controllers such that a portion of torque output of the rotor produced by the first controller is different to the torque output of the rotor produced by the second controller.

5. An EPU according to claim 4, wherein torque output on the rotor produced by one of the first or second controllers is greater than the torque output on the rotor produced by the other controller.

6. An EPU according to claim 5, wherein the vehicle controller is configured to provide a first torque demand and second torque demand to the respective first and second controllers such that the first or second controller is configured to produce a greater torque output on the rotor than the other controller based on a state of charge of the respective first or second energy source.

7. An EPU according to claim 6, wherein the vehicle controller is configured to provide the torque demand that produces the greater torque output to the respective controller in the power circuit having the energy source with the greater state of charge.

8. An EPU according to claim 1, wherein the vehicle controller is configured to provide a braking torque demand to either of the first or second controllers such that a braking torque is produced on the rotor by the respective first or second controller.

9. An EPU according to claim 8, wherein the vehicle controller is configured to provide a torque demand to the other of the first or second controller such that a torque output is produced on the rotor that is greater than the braking torque produced on the rotor.

10. An EPU according to claim 9, wherein the first or second controller receiving the braking torque demand is configured to convert an excess torque output produced on the rotor into a regenerative current for supplying the respective energy source, the excess torque output being the difference in torque on the rotor between the torque output from the other of the first or second controller and the net torque output from the electrical machine.

11. An EPU according to claim 1, wherein the vehicle controller is configured to detect if the first or second controllers are in a fail state.

12. An EPU according to claim 11, wherein the vehicle controller is configured to provide a torque demand only to the controller not in a fail state, optionally wherein the vehicle controller is configured to provide an adjusted torque demand to at least partially compensate for the controller in the fail state.

13. An EPU according to claim 11 or 12, wherein the controller in the fail state is configured to convert a torque output produced on the rotor by the controller in the non-fail state into a regenerative current for supplying the respective energy source.

14. An EPU according to any preceding claim, wherein one or both of the energy source comprises one or more of a fuel cell, battery, or DC supply.

15. An EPU according to any preceding claim, wherein the electric machine is an axial flux machine, optionally
wherein the stator of the axial flux machine comprises:
a plurality of stator bars disposed circumferentially at intervals around an axis, each of the stator bars having a single-phase multi-turn coil wound therearound to form a stator coil stack for generating a magnetic field generally parallel to the axis, the plurality of stator coil stacks being arranged to provide a hollow region at the centre of the axis, optionally
wherein the rotor of the axial flux machine comprising a set of permanent magnets and is mounted for rotation about the axis of the machine, the rotor being spaced apart from the stator along the axis of the machine to define a gap between the stator and rotor, optionally
wherein the axial flux machine comprises a second rotor comprising a set of permanent magnets and is mounted for rotation about the axis of the machine, the second rotor being spaced apart from the stator along the axis of the machine to define a gap between the stator and second rotor, and the second rotor being disposed on a side of the stator opposed to the rotor.
